# EUROPEAN PATENT APPLICATION

(11) **EP 0 933 666 A1**
(43) Date of publication of application: **04.08.1999**
(21) Application number: 98101643.9
(22) Date of filing: 30.01.1998
(51) Int. Cl.: G03B 13/02, H04N 5/262, H04N 5/232, A61B 3/113

(54) **Image detecting apparatus controlled by detecting the viewing direction**

(71) Applicant: SONY DEUTSCHLAND GmbH, 50829 Köln (DE)
(72) Inventor: Steib, Martin, Sony Deutschland GmbH, 50829 Köln (DE)
(74) Representative: Melzer, Wolfgang, Dipl.-Ing.

(57) **Abstract**

According to the present invention a viewpoint controlled image detecting apparatus is provided comprising a viewpoint detection device (1) for detecting the viewpoint of an eye of an user and for outputting a viewpoint information. A transmitter (2) transmits the viewpoint information from the viewpoint detecting device (1) to a controller. Furthermore, an image detecting device (4) is provided. The detection area of the image detecting device (4) is controlled by the controller corresponding to the transmitted viewpoint information. Therefore, the detection area of the image detecting device corresponds to the viewpoint area of a user's eyes. According to an embodiment especially designed sensor glasses (5) are provided to register every movement of the user's eyes. These movements can be transmitted in a wireless manner (2) to a pocket-size camcorder (4), which can be carried flat on the persons shirt or pocket. The camcorder can be operated either by voice operation or by remote control. Therefore, according to the present invention camcording in the literal meaning of "what you get is what you see" is enabled.

## Description

The present invention relates to a viewpoint controlled image detecting apparatus.

The present invention particularly finds its application in the technical field of video cameras. For example when using a camcorder, the user is usually forced to have at least one hand occupied with a camera and to focus the entire attention on the camera-object-system. Due to that situation, the camcording person is very obvious in his action and furthermore excluded from the activities he is trying to record on the videotape by means of the camera.

From WO 97/05741 a video surveillance system is known comprising a camera equipped with a fisheye lens having a substantially hemispheric field of view. This known system implements operations equivalent to the panning, tilting and zooming of a conventional camera without the use of moving parts. The lens is mounted vertically above a plane under surveillance. The camera produces fisheye image made up of a plurality of pixels. The fisheye image is distorted due to the properties of the fisheye lens. This known system corrects the distortion by mapping the pixels of the fisheye image to coordinates produced by selecting a particular part of the fisheye to be viewed.

From WO 92/21208 a device for omnidirectional image viewing providing pan-and-tilt orientation, rotation and magnification within a hemispherical field-of-view is known. Said known image device is based on the effect that the image from a fisheye lens, which produces a circulate image of an entire hemispherical field-of-view, which can be mathematically corrected using high speed electronic circuitry. An incoming fisheye image from an image acquisition source is captured in a memory of a device, a transformation is performed for the viewing region of interest and viewing direction, and a corrected image is output as a video image signal for viewing, recording or analysis.

From EP-A-657 767 a visual axis detecting apparatus is known. Thereby light from a light source is projected onto an eyeball and the position of illumination on the eyeball is changed by successively electrically choosing a plurality of light-emitting elements in the light source or by mechanically deflecting the light from the light source by means of a movable mirror. The visual axis is detected by the detecting the reflection light from the eyeball by a photoelectric conversion unit.

From EP-A-694 281 a viewpoint detection device is known comprising a viewpoint detection circuit which detects a position of viewpoint of an operator, a memory for storing detection information from the viewpoint detection circuit in case that the position of the viewpoint is probably detected and a correction circuit which compensates an output of the viewpoint detection circuit by using the detection information stored in the memory, when the detection of the position of viewpoint is not conducted properly by the viewpoint detection circuit.

In camcorder technology there is still the disadvantage that the camera has to be held in front of the eyes of the user, or, if a viewfinder is used, at least in front of the body of the user to move the camera in the direction of the object to be recorded.

It is the object of the present invention to provide for an image detection device, which permits an image detecting process during which the user is discharged from the effort of focusing a certain object with the camera.

The object of the invention is achieved by means of the features of claim 1.

According to the invention a viewpoint controlled image detecting apparatus is provided, which fins application for example in a pupil movement operated digital camcorder. The viewpoint controlled image detecting apparatus according to the present invention comprises a viewpoint detecting device for detecting the viewpoint of an eye of an user and for outputting viewpoint information. A transmitter transmits the viewpoint information from the viewpoint detecting device to a controller of an image detecting device. The detection field of the image detecting device is controlled by the controller corresponding to the transmitted viewpoint information, such that the detection field corresponds to the region surrounding the viewpoint of the eye of the user.

Particulary, the viewpoint detecting device can be integrated in glasses.

The image detecting device can be a camcorder.

The transmitter can comprise wireless transmission means for transmitting in a wireless manner the viewpoint information from the viewpoint detecting device to the controller of the image detecting device.

The controller can comprise a voice control means and/or a remote control for controlling the operation of the image detecting device.

The image detecting device can comprise a rotatable frog-eye lens, wherein the controller controls the rotational position of the frog-eye lens on the basis of the transmitted viewpoint information such that the optical axis of the frog-eye lens corresponds to the viewpoint of the user.

The image detecting device can comprise a camera unit supplying image information to an image buffer. The controller then selects a portion of the image buffer according to the transmitted viewpoint information, such that the portion of the image buffer corresponding to the view field of the eye of the user is read out from the image buffer.

The image detecting device can comprise a lens and a CCD unit. The controller thereby is adapted controls a motor such as to displace the CCD unit orthogonally to the optical axis of the lens in response to the transmitted viewpoint information.

The image detecting device (camera) can be adapted to be fixed to a user's head, such that the image detecting device (camera) is fixed in rotation with the user's head.

The lens can be a fish-eye lens providing a hemispheric view.

Alternatively the lens can be a 360 degrees rotable frog-eye lens.

Furthermore, means for detecting and compensating for the movement of the head of the user is provided outputting movement information to the controller. Thereby the movement of the head of the user can be den into account when controlling the detection field of the image detecting device.

The present invention will now be explained by means of different embodiments of the present invention and with reference to the accompanying drawings.
- Fig. 1: shows an embodiment of the present invention,
- Fig. 2: shows generally the internal structure of the embodiment of Fig. 1,
- Fig. 3: shows in a detailed way the internal structure of a second embodiment of the present invention, and
- Fig. 4: shows in a detailed way the internal structure of a third embodiment of the present invention.

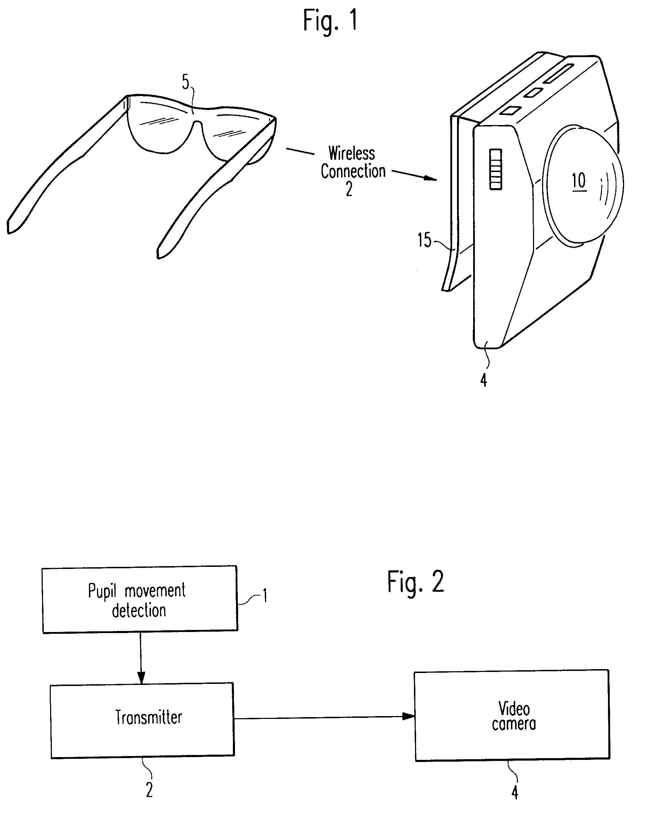

As can be seen from Fig. 1 according to a first embodiment of the present invention a pupil movement operated camcorder 4 comprising a viewpoint controlled image detecting apparatus is proposed. Sensor glasses 5 are provided which register every movement of the user's eyes. These movements are transmitted via a wireless connection 2 to a pocket-size camcorder 4, which can be carried by a clip 15 flat on the person's shirt or pocket alternatively the camcorder 4 can be carried on the user's head. The camcorder 4 comprises a frog-eye type lens 10 according to the embodiment shown in Fig. 1. The frogeye type lens 10 of the camcorder 4 adapts the movement of the person's eyes as it is detected by the sensor glasses 5. The camcorder's functions can be operated for example either by voice operation or by remote control which will be explained later on. Therefore, according to the present invention a decent way of camcording in the literal meaning of "what you get is what you see" is possible.

In case of the embodiment is shown in Fig. 1 the controller 3 controls the rotation of the rotatable frog-eye lens 10 such as the optical access of the frog-eye lens 10 corresponds to the viewpoint as it is detected by the sensor glasses 5.

In Fig. 2 the embodiment of Fig. 1 is shown functionally. The movement of a pupil of an eye of a user is detected 1. A pupil movement information (viewpoint information) is given to a transmitter 2. The transmitter 2 transmits the viewpoint information from the pupil movement detection 1 to the video camera 4.

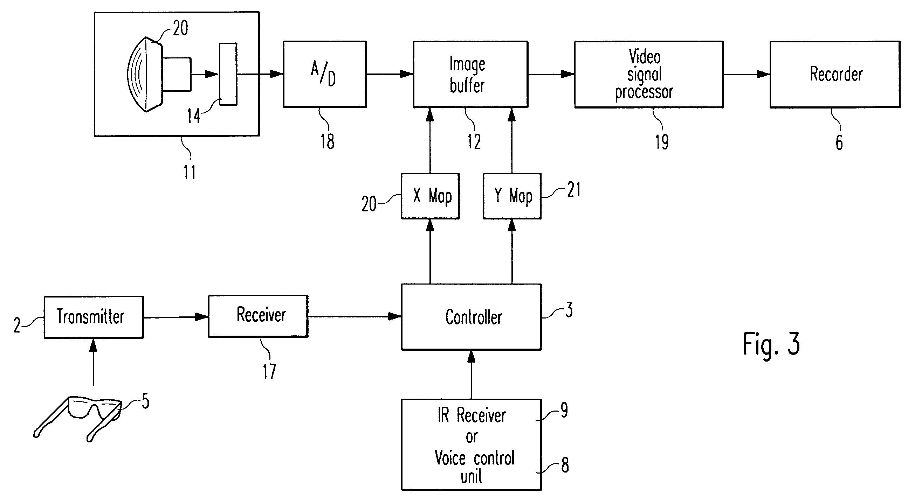

Now a second embodiment of the present invention will be explained with refernce to figure 3. As already shown and explained with the reference to Fig. 1 and Fig. 2, according to the present invention the viewpoint of an eye of an user is detected for example by means of sensor glasses 5. The viewpoint information is wirelessly transmitted from a transmitter 2 to a receiver 17, which receiver 17 is mounted at a camera unit 11. The viewpoint information, which has been wirelessly transmitted, is given to a controller 3. The controller 3 furthermore receives operation commands from an infrared receiver (remote control) 9 or a voice control unit 8. Coordinate transformation circuits 20, 21 connect the controller 3 and an image buffer 12. The coordinate transformation circuits 20, 21 transform the coordinates corresponding to the viewpoint information from the sensor glasses 5 and supplied by the controller 3 such as to select a portion of the image buffer 12 corresponding to the view field of the user's eyes. According to the second embodiment as shown in figure 3 the camera unit 11 comprises a fish-eye lens 20 providing a hemispherical field-of-view. The image of the fish-eye lens 20 is detected by a CCD unit 14. An analog/digital converter 18 is provided to convert the analog image information from the CCD unit 14 and to supply to the image buffer 12. The portion of the image buffer 12 selected by the controller 3 is given to a video signal processor 19 which can effect all kinds of digital video signal processing, such as image filtering etc.. The output signal from the video signal processor 19 can then be recorded in a recording unit 6.

The second embodiment according to Fig. 3 has the advantage, that no moving parts are needed in the camera unit 11.

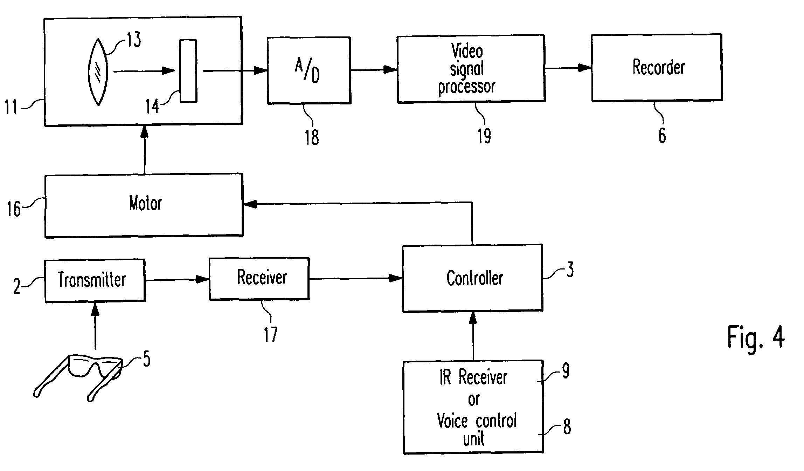

A third embodiment according to the present invention will now be explained with the reference to Fig. 4. As explained and shown with reference to the embodiment of Fig. 3, the viewpoint of an eye of the user is detected for example by means of sensor glasses 5. Viewpoint information is transmitted from a transmitter due to receive a 17 in a wireless manner and then given to a controller 3. The operations data of the controller 3 is controlled by means of an IR remote unit 9 or a voice control unit 8. In contrast to the embodiment of Fig. 3 according to the third embodiment shown in figure 4 the controller 3 gives a displacement commands to a motor 16. The motor 16 is adapted to displace the CCD unit 14 of a camera unit 11 orthogonally to the optical access of the commonly used lens 13. In contrast to the embodiment of Fig. 3 in this second embodiment no fish-eye lens is needed. By displacing the CCD unit 14 by means of the motor 16 and controlled by the controller 3 in response to the viewpoint information transmitted from the sensor glasses 5 in a wireless manner, the portion of the image as detected by the lens unit 13 corresponding to the view field of the eye of a user can be selected. The selected region of the lens unit 13 is then digitized in an analog/digital-converter 19, signal process in a video signal processor 19 and then recorded in a video recorder 6 correspondingly to the embodiment of Fig. 3.

In case a camera unit according to the embodiments as shown in figures 1, 2, 3 or 4 is attached to the body of the user, head movement detecting and compensating means which are not shown, can be added, as a camera unit 4 attached to the body of the user will not follow the movement of the head.

Alternatively, the camera unit 4 can be attached to a user's head, in which case it is always guaranteed that the camera unit 4 will follow the movement of the head of the user. Therefore no head movement detecting and compensating means are needed in this application.

According to the present invention the user therefore can record everything what he is currently looking at without having to bring his camcorder in this direction. Only the lens of the camcorder (embodiment according to Fig. 1) is directed by movement of the user's eyes.

The user of the device according to the present invention can thereby be entirely focused on the object when recording. The user is no longer excluded from the activities he is trying to record. He is no longer restricted in his perception of his environment and no longer perceived as a kind of "voyeuristic intruder". Furthermore, people to be recorded do not feel any longer uncomfortable as the camera is not directed on them.

As a further advantage of the present invention the person using the pupil movement operated digital camcorder according to the present invention
- does not need to move the camera itself,
- can record everything he is actually looking at,
- can survey his environment for interesting objects without restrictions,
- can optionally records objects by using the voice operation mode or a remote controller,
- can participate in activities without the risk of missing anything,
- can record people without intruding too much in their intimicy (e. g. playing children etc.), and
- has his hands free for other activities (e. g. reporters to take notes).

The present invention therefore has a broad range of application. Possible usage examples of the pupil movement operated digital camcorder according to the present invention are as follows:
- tourists in museums, at sight-seeing etc.
- children parties, public events,. sport events etc.
- scientists with observation tasks (e. g. ornithologists),
- securities detectives with surveillance tasks,
- press or TV-reporters interviewing persons etc., and
- generally in situations when camcording is considered as inappropriate.

With the device according to the present invention there is no longer any need to carry and operate a camcorder with the hands and furthermore the vision of the user is no longer trapped in the camera's view finder.

## Claims

1. Viewpoint controlled image detecting apparatus,
comprising a viewpoint detecting device (1) for detecting the viewpoint of an eye of an user and for outputting viewpoint information,
a transmitter (2) transmitting the viewpoint information from the viewpoint detecting device (1) to a controller (3),
and an image detecting device (4),
wherein the detection field of the image detecting device (4) is selected by the controller (3) corresponding to the transmitted viewpoint information.

2. Image detecting apparatus according to claim 1,
characterized in that
the viewpoint detecting device (1) is integrated in sensor glasses (5) attachable to the head of a user.

3. Image detecting device apparatus according to anyone of claims 1 or 2,
characterized in that
the image detecting device (4) comprises a video recorder (6).

4. Image detecting apparatus according to anyone of the preceding claims,
characterized in that
the transmitter (2) comprises a wireless transmission means (7) for transmitting in a wireless manner the viewpoint information from the viewpoint detecting device (1) to the image detecting device (4).

5. Image detecting apparatus according to anyone of the preceding claims,
characterized in that
said controller (3) comprises a voice control means (8) and/or a remote control (9) for controlling the operation of the image detecting device (4).

6. Image detecting apparatus according to anyone of the preceding claims,
characterized in that
the image detecting device (1) comprises a rotatable frog-eye lens (10), wherein the controller (3) controls the rotational position of the frog-eye lens (10) on the basis of the transmitted viewpoint information such that the optical axis of the frog-eye lens (10) corresponds to the view field of the user.

7. Image detecting apparatus according to anyone of claims 1 to 5,
characterized in that
the image detecting device (4) comprises a camera unit (11) supplying image information to an image buffer (12),
wherein the controller (3) selects a portion of the image buffer (12) according to the transmitted viewpoint information.

8. Image detecting apparatus according to claim 6,
characterized in that
the camera unit (11) comprises a fish eye lens (20).

9. Image detecting apparatus according to anyone of claims 1 to 5,
characterized in that
the image detecting device (4) comprises a lens (13) and a CCD unit (14), and the controller (3) is adapted to control a motor (16) such as to displace the CCD unit (14) orthogonaly to the optical axis of the lens (13) according to the transmitted viewpoint information.

10. Image detecting apparatus according to anyone of the preceding claims,
characterized in that
the image detecting device (4) is adapted to be fixed to a user's head, such that the image detecting device (4) device is fixed in rotation with the user's head.

11. Image detecting apparatus according to anyone of the preceding claims,
characterized in that
means for detecting and compensating for the movement of the head of the user is provided outputting movement information to the controller (3).
